(19) **Europäisches Patentamt**

**European Patent Office**

**Office européen des brevets**

(11) **EP 1 226 658 B1**

(12) **EUROPEAN PATENT SPECIFICATION**

(45) Date of publication and mention
of the grant of the patent:
**24.05.2006 Bulletin 2006/21**

(51) Int Cl.:
*H04B 1/707* (2006.01)

(21) Application number: **00979494.2**

(22) Date of filing: **12.10.2000**

(86) International application number:
**PCT/EP2000/010064**

(87) International publication number:
**WO 2002/032004 (18.04.2002 Gazette 2002/16)**

(54) **INTERFERENCE CANCELLATION SYSTEM IN A CDMA RECEIVER AND METHOD FOR CANCELLING INTERFERENCE**

STÖRUNGSUNTERDRÜCKUNGSSYSTEM IN EINEM CDMA EMPFÄNGER UND VERFAHREN ZUR STÖRUNGSUNTERDRÜCKUNG

SYSTEME DE SUPPRESSION D'INTERFERENCES DANS UN RECEPTEUR AMRC ET PROCEDE DE SUPPRESSION D'INTERFERENCES

(84) Designated Contracting States:
**DE FR GB**

(43) Date of publication of application:
**31.07.2002 Bulletin 2002/31**

(73) Proprietor: **MATSUSHITA ELECTRIC INDUSTRIAL CO., LTD.**
**Osaka 571-8501 (JP)**

(72) Inventors:
• **GOLITSCHEK, Alexander**
**63225 Langen (DE)**
• **WIEBKE, Thomas**
**63225 Langen (DE)**
• **SORGER, Ulrich**
**63225 Langen (DE)**
• **GLIGOREVIC, Snjezana**
**63225 Langen (DE)**

(74) Representative: **Grünecker, Kinkeldey, Stockmair & Schwanhäusser**
**Anwaltssozietät**
**Maximilianstrasse 58**
**80538 München (DE)**

(56) References cited:
**EP-A- 0 711 044        WO-A-99/09674**

• **HERZOG R: "INTERFERENCE CANCELLATION FOR A HIGH DATA RATE USER IN CODED CDMA SYSTEMS" ATLANTA, GA, JUNE 7 - 11, 1998, NEW YORK, NY: IEEE, US, vol. CONF. 5, 7 June 1998 (1998-06-07), pages 709-713, XP000890965 ISBN: 0-7803-4789-7**
• **KLEIN A ET AL: "ZERO FORCING AND MINIMUM MEAN-SQUARE-ERROR EQUALIZATION FOR MULTIUSER DETECTION IN CODE-DIVISION MULTIPLE-ACCESS CHANNELS" IEEE TRANSACTIONS ON VEHICULAR TECHNOLOGY, US, IEEE INC. NEW YORK, vol. 45, no. 2, 1 May 1996 (1996-05-01), pages 276-287, XP000598095 ISSN: 0018-9545**
• **SHIMIZU S ET AL: "ADVANCED MULTI-STAGE INTERFERENCE CANCELLER SYSTEMS WITH ADAPTIVE RADIO CHANNEL ESTIMATION USING PILOT AND INFORMATION SYMBOLS" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, vol. E80-A, no. 12, 1 December 1997 (1997-12-01), pages 2464-2469, XP000768672 ISSN: 0916-8508**

EP 1 226 658 B1

**Description**

The present invention relates to mobile communication systems, in particular to code division multiple access (CDMA) systems and is directed to an interference cancellation system in a CDMA receiver according to claims 1 and 19. Further, the present invention concerns an interference cancellation method in a CDMA receiver according to claims 11 and 23.

The capacity of a CDMA system is mainly limited by the interference which each user experiences in his received signal. In order to increase the capacity within a cell of a CDMA communication system, interference has to be cancelled as far as possible.

Furthermore, in systems with high interference, the spreading factor has to be raised in order to maintain a given quality of service (QoS). However, higher spreading factors directly translate to lower bit rates which are available for transmission of data.

In the field of CDMA communication systems, the following methods have been used on the receiver side in order to mitigate the problem of interference.

A known method is to jointly detect the received signals of a plurality of users. However, the joined detection method has the drawback in that it involves inversion of a matrix whose dimensions increase with the number of users. For example, for 64 users within a cell, a 64x64 matrix has to be inverted which involves extremely high complexity which results in excessive processing power and time.

A further known method is a single-user detection which is one of the simplest detection schemes. It consists of detection of a single user neglecting all other signals present. Hence, for the single user case results are optimum but in a multi-user environment the performance, i. e. bit error rate etc., degrades significantly.

IEEE Journal On Selected Areas In Communications, vol. 17, no. 12, December 1999, pages 2082 to 2089 "Iterative Multiuser Detection Using Antenna Arrays and

FEC on Multipath Channels" describes a multiple-access communication receiver system with an iterative receiver that improves the initial estimates from an antenna array in a multi-path propagation environment.

In section III of this paper, the structure of the iterative receiver is explained in more detail. To this end, the receiver, which is iterative, takes the output of the channel and performs a combination of soft interference cancellation and matched filtering. The interference canceller takes a priori probabilities on the channel symbols of every user which are then employed to construct a soft estimate of the symbol. The interference cancellation operation is then performed in the spread domain.

WO 99/09674 A and "Interference Cancellation for a High Date Rate User Encoded CDMA Systems", IEEE, volume 5, pages 709-713, disclose a method and apparatus for reducing co-channel interference in a CDMA radio telephone system. Wherein a traffic channel signal is transmitted from a base station to a mobile station. A reduced interference signal is formed at the mobile station by subtracting an interference signal from the traffic channel signal. A decoded signal is formed by decoding information representative of the reduced interference signal and metric values are used as inputs to a feedback loop that is used to form the interference signal that is subtracted from the traffic channel signal.

There is, however, still the need for an interference cancellation system and method with less complexity and satisfactory performance in a multi-user environment.

This object is solved by an interference cancellation system comprising the features of claim 1 as well as by a method having the steps as defined in claim 11.

Preferred embodiments of the invention are subject to various dependent claims.

In the following, embodiments of the invention are described in further detail with reference to the accompanying drawings in which:

figure 1 illustrates the basic structure of a transmitter in a CDMA communication system;

figure 2 illustrates the basic structure of a corresponding receiver in a CDMA communication system;

figure 3 illustrates a first embodiment of an interference cancellation system according to the present invention;

figure 4 shows a more detailed structure of the detector employed in the embodiment shown in figure 3,

figure 5 shows a second embodiment of an interference cancellation system of the present invention in a multi-stage implementation,

figure 6 shows an implementation of the present invention using turbo codes, and

figure 7 shows a RAKE receiver in which an interference cancellation system of the present invention is implemented.

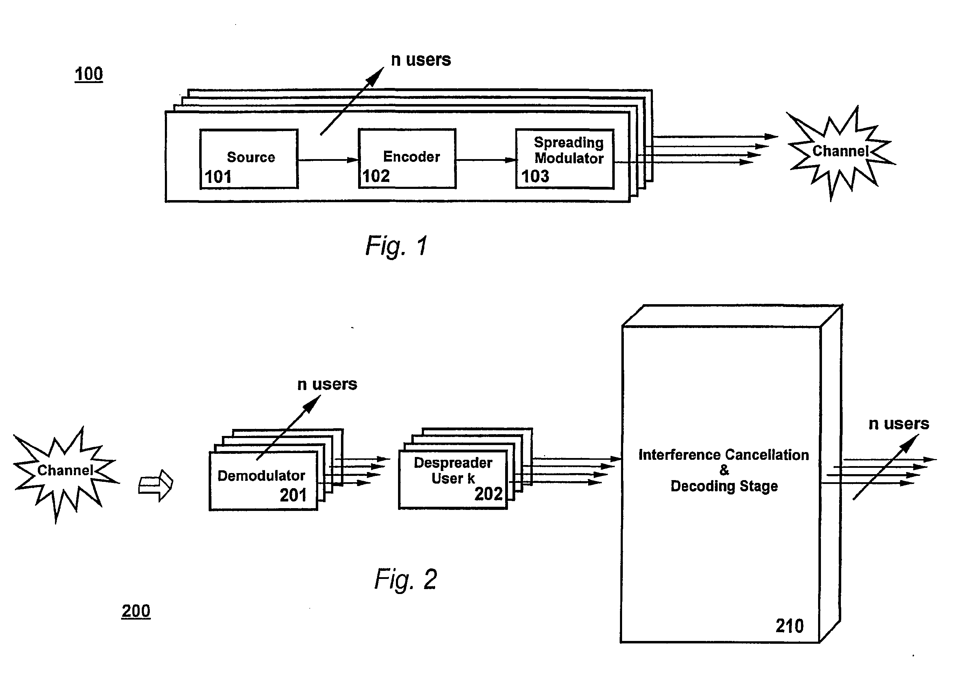

Figure 1 shows the basic configuration of a transmitter 100 wherein each user's signal coming from a source 101 is encoded using an encoder 102 which employs an outer code, e.g. a forward error correction code (FEC) which can consist of block codes, convolutional codes or other codes.

Subsequently, the encoded signals are spread using an inner code which can consist of pseudo-noise codes, orthogonal codes or other codes and combinations of these to facilitate multiple channel access. The inner code is typically different for each user. A spreading modulator 103 is used for modulating the output signal from encoder 102 and transmit same over a communication channel.

Those skilled in the art will readily appreciate the detailed structure of a transmitter without the need of disclosing further details here.

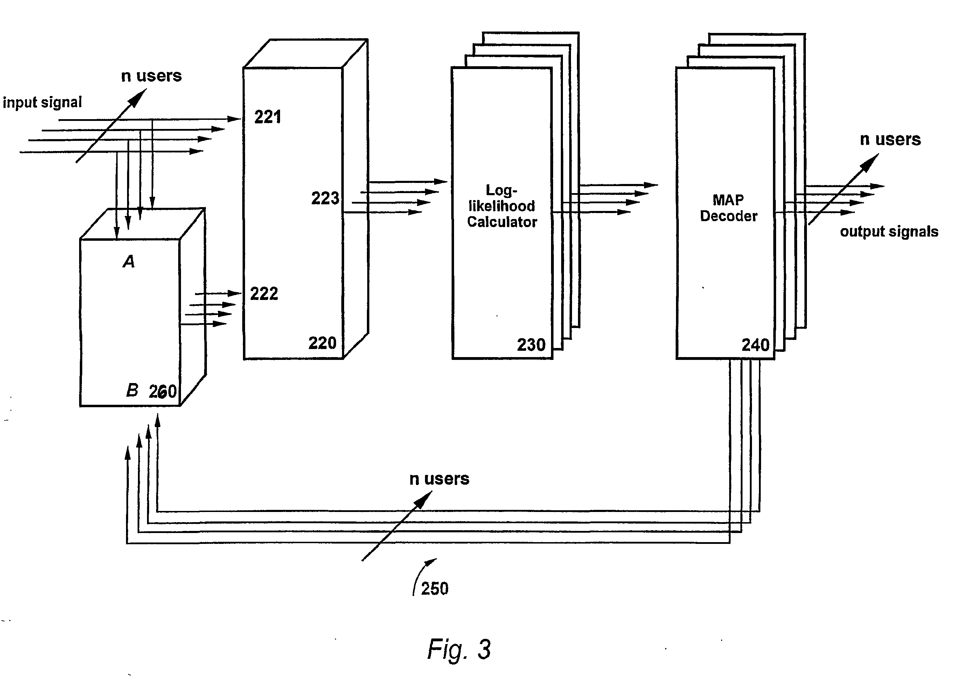

The basic structure of a receiver 200 is shown in figure 2. Here, the received input signal is demodulated in a demodulator 201 and despread in a despreader 202 using the corresponding inner code for each user. After despreading the signals, they are fed to a interference cancellation and decoding stage 210, the details of which are shown in figures 3 to 5.

Consequently, the output signals from the interference cancellation and decoding stage 210 are obtained using information on the inner codes as well as information contained in the outer codes. By removing interference from the received input signal, system capacity as well as data rates within a cell can be increased.

Figure 3 shows a first embodiment of the interference cancellation system according to the present invention. The interference cancellation and decoding stage 210 comprises a multi-user detector 220 having a first plurality of inputs 221 for receiving the receiver input signal of n users of a CDMA communication system. Furthermore, the detector comprises a plurality of second inputs 222 for receiving the output signals of a selection switch 260, the purpose of which will be described in more detail further below.

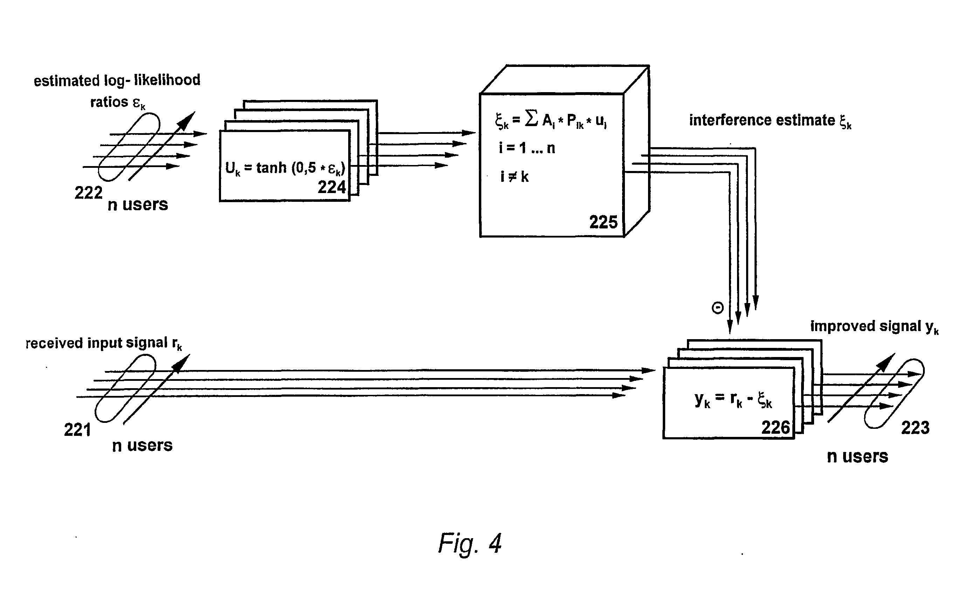

The detector 220 comprises a plurality of outputs 223 for outputting the detector output signals. Further details of the detector 220 will be described with reference to figure 4.

The detector outputs are connected with a log-likelihood calculator 230 which calculates the log-likelihood ratio of the applied signals according to the formula:

$$\lambda = \log \frac{p(y = 0)}{p(y = 1)}$$

Further, the log-likelihood calculator 230 is connected with its outputs to the inputs of a MAP decoder 240 which is a soft-input/soft-output decoder for decoding the data information in the received input signal. Further, the decoder 240 outputs an estimated log-likelihood ratio for all n users to input port B of the selection switch 260 using a feedback loop 250.

Next, the detailed structure of the detector 220 is described with reference to figure 4. The plurality of estimated log-likelihood ratios $M_k$ is received at the second plurality of detector inputs 222 and applied to a scaling means 224 in order to form a tentative decision on the transmitted signal using the tanh function. Consequently, the signals which are input to the scaling means 224, ranging in their values between $(-\infty; +\infty)$, are scaled

to a signal which can be seen as a mean estimate of the log-likelihood ratio of the input signals, ranging between [- 1; +1].

Although the correct mathematical calculation of the scaling means 224 is

$$U_k = \tanh(0,5 \cdot \varepsilon_k)$$

simulations have proven that the following relationship is also advantageous:

$$U_k = \begin{cases} -1 & \text{for } \varepsilon_k < -2 \\ \varepsilon_k/2 & \text{for } -2 \leq \varepsilon_k \leq +2 \\ +1 & \text{for } \varepsilon_k > +2 \end{cases}$$

The outputs of the scaling means 224 are connected with the corresponding inputs of a summing means 225 which adds the scaled signals to obtain an interference estimate which user k experiences from all other users. To this end, prior to summing, the signals applied to the input of the summing means are firstly scaled by their respective estimated amplitude and by the cross-correlation coefficient $\rho_{ik}$ between the signal of user i and the signal of user k.

Consequently, the summing means 225 performs the following mathematical operation:

$$\xi_k = \Sigma\, A_i \cdot \rho_{ik} \cdot u_i$$

wherein $\xi_k$ represents the interference estimate, $A_i$ is the channel estimate, comprising information with respect to the attenuation as well as the phase rotation in the channel and $u_i$ is the output signal from scaling means 224.

Finally, the detector comprises combination means 226 to combine the received input signals $r_k$ and the output signals from the summing means 225. The output of the combination means 226 is provided at the plurality of detector outputs 223.

Finally, the method of cancelling interference in the CDMA receiver described above will be explained in more detail.

The received input signal of n users of the communication system are, during the first iteration, simultaneously provided to the first plurality of detector inputs 221 and through the selection switch 260 to the second plurality of detector inputs 222. In this case, selection switch 260 connects its input port A and conducts the signals applied thereto as output signals of the switch.

Afterwards, meaning for each further iteration, the selection switch 260 selects input port B and outputs the signals applied thereto as output signals.

In detector 220, the signals provided at the first and second plurality of inputs are logically combined in order to provide an improved signal $y_k$ for further processing. To attain this, the signals at the second plurality of detector inputs 222 are weighted included scaling in the scaling means 224 and taking into account the cross-correlation property of the inner code in the summing means 225 to obtain an estimate of the received interference. Subsequently, the interference is cancelled by simple subtraction of the weighted signals from the original received input signal. This is accomplished in summing means 226.

Hence, the cancellation itself is a substraction of weighted signals from the originally received signal. Thus, it is very easy to implement.

It should be noted that even when only applying one iteration, i.e. no usage of the outer code information provided by the decoder, an improvement over prior art systems is achieved. Since the interference cancellation removes more errors than it introduces, this process can be repeated over several iterations with subsequent estimates of the received interference being derived from the output of the MAP decoder.

The output signals of detector 220 are applied through log-likelihood calculator 230 as mentioned above to MAP decoder 240. The soft output of the decoder provides on the one hand, infobits used for decoding the information data, and on the other hand, codebits which are fed back to selection switch 260 via feedback loop 250. It should be noted that the outer code employed by decoder 240 can be any scheme of forward error correction code although the need of soft decision output values at the decoder suggests the usage of convolutional codes or derivations of these, e.g. turbo codes.

The decoder output signals which are fed back to input port B of selection switch 260 include the information contained in the outer code, i.e. the improved decoded signal for each user k. For this and each further iterations, the selection switch selects input port B and the signals which are applied to the second plurality of decoder inputs 222 correspond to the decoder output signals from the previous iteration.

According to a variant of the interference cancellation system, not shown in the figures, instead of computing the cross-correlation matrix formed by cross-correlation coefficients $\rho_{ik}$ to form the interference estimate $\zeta k$, the process of spreading can also be applied to the signals output from scaling means 224. In this case, the tanh operation is performed on the despread signal and the tentative decision is then respread before summing over all the users within summing means 225. According to this variant, the output signals from summing means 225 are fed to combination means 226 to perform the interference cancellation on the received spread input signals $r_k$. In other words, the received input signal $r_k$ is

not despread, but despreading would have to be applied to the output signal from combination means 226 using the spreading code for user k. Also, for the initial estimate, the feedback signals have to be despread before entering scaling means 224. In this case, in the summing means 225 scaling is only done by the channel estimate $A_i$ before summation.

This variant is particularly important in dealing with asynchronous systems, that is, systems where user data does not arrive time-aligned at the receiver and/or when different users operate with different spreading factors i.e. in a multi-rate environment.

A further variant to form a tentative decision in the receiver is, instead of usage of the tanh function any monotonous function that maps input values ranging from $(-\infty;\infty)$ to output values ranging from $[-1; +1]$, which could be simpler to implement but might not be the optimum in performance.

In addition to spreading codes, a further scrambling code could be applied to the transmitted signal. In the receiver this would result either in the computation of the cross-correlation matrix of the combined spreading and scrambling codes or in the inclusion of descramblers before despreaders and rescramblers after respreaders.

In actual radio environments, particular in mobile communication, the signals suffer from various forms of signal fading and multi-path propagation. To mitigate those effects, it is known to introduce interleavers in the transmitter and deinterleavers in the receiver and/or to include multi-path resolving structures in the receiver such as a RAKE receiver.

These additional optional features can be included without problems in the embodiment of the invention described above. In fact, the introduction of different interleaver structures for each user promises improved performance, i.e. larger gains between the iterations.

For a multi-path receiver, the cancelled signals can be used to perform the tasks of the RAKE receiver on the improved signal again. This will result in improved channel estimation, improved signal estimation and reduced interference between different RAKE fingers of the same user.

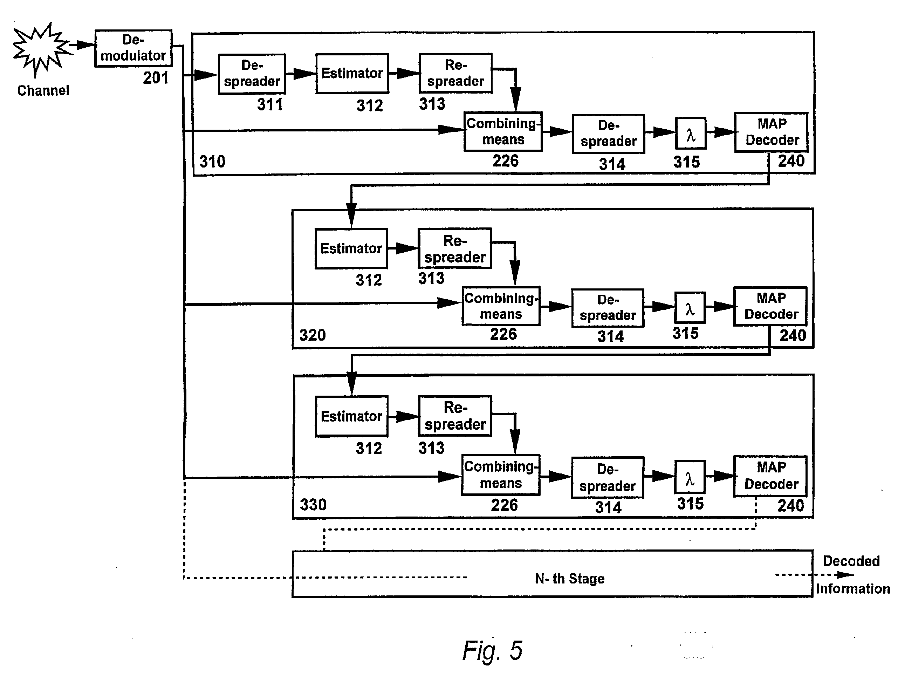

With regard to figure 5, a second embodiment of the interference cancellation system will be described. Here, the interference canceller is embodied as a multi-stage system comprising a plurality of stages being similar structured. Moreover, those components which correspond with that of the first embodiment, namely the combining means 226 for performing the interference cancellation and the MAP decoder 240 have been designated with the same reference numerals.

As shown in the figure in more detail, the initial stage 310 comprises a despreader 311, an estimator 312 and a respreader 313 in sequence. Further, between the combining means 226 and the MAP decoder 240 a despeader 314 and a log-likelihood ratio calculator $\Sigma$ (reference numeral 315) are connected in series.

The second and third stages 320, 330 up until a N-th stage are structured identically to the initial stage except that the despreader 311 has been omitted. Moreover, the estimator 312 receives the output signal from the MAP decoder 240 as its input signal instead of the demodulated input signal from demodulator 201.

From the final N-th stage, the decoder output is taken as the decoded information data.

It should be noted that figure 5 is a simplified diagram in which each arrow represents a full vector of respective signals illustrated in figures 1 to 4.

Also in this embodiment, it will be appreciated that the interference cancellation system removes more information errors than it introduces such that repetition of the interference cancellation process by using a plurality of stages increases the interference cancellation gain.

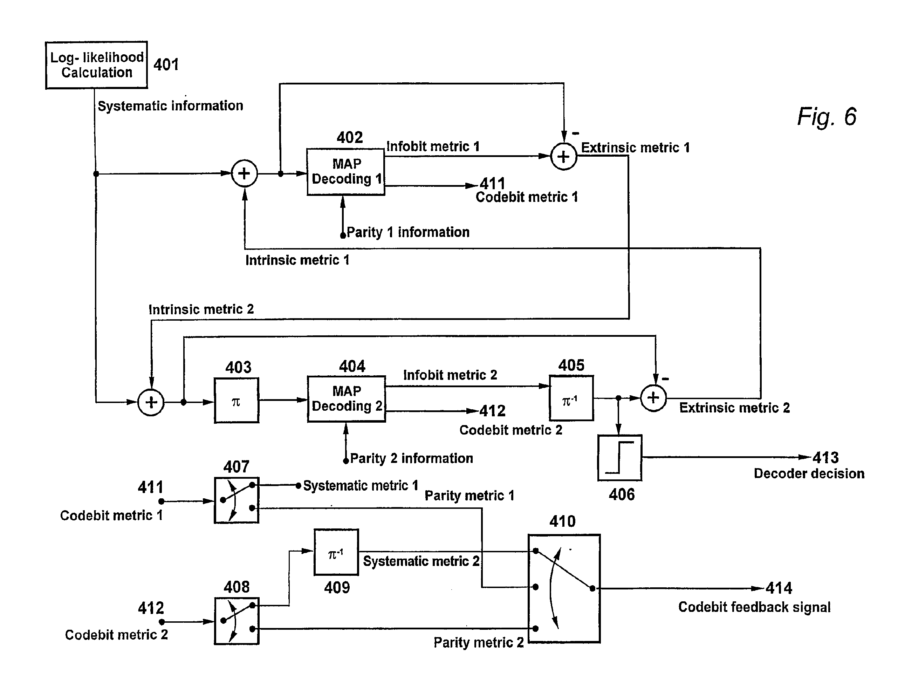

Figure 6 shows an implementation of the present invention using turbo codes as mentioned above. In the upper half of the figure, a basic structure of a turbo decoder having blocks 401 to 406 is shown providing a decoder decision output 413. The lower half of the figure shows how the feedback signal 414 is calculated from results obtained by MAP decoders 402, 404. Turbo decoders are known in the art, such that detailed discussion of the decoding operation can be omitted and is understood by those skilled in the art.

In brief, the signals obtained from the log-likelihood calculation stage 401 are fed to a first and second MAP decoder 402, 404 respectively. These signals represent systematic information that the MAP decoders respectively receive at their first inputs. At their second inputs, parity information is received and at their outputs infobit metric signals and codebit metric signals are provided.

In more detail, in the case of decoder 402, infobit metric 1 is combined with the input signal of the decoder. The resulting signal is applied to the input of the second MAP decoder 404, where it is combined with the systematic information signals from the log-likelihood calculator 401. In an analogous manner, at the output of decoder 404 extrinsic metric signal is fed back to the input of the first MAP decoder 402, where it is combined with the systematic information signal from log-likelihood calculator 401. However, the signals of the second MAP decoder 404 undergo an interleaving operation (block 403), wherein the input signal is interleaved according to a predetermined scheme before being applied to the input the decoder. Further, an inverse $\pi^{-1}$ operation (block 405) for the infobit metric signal at the decoder's output is effected. The outputted infobit metric signal is applied after the $\pi^{-1}$ operation to a threshold decider block 406 which outputs either +1 or -1 depending on the sign of the input signal and which is subsequently used as a decoder decision signal 413.

Basically, in turbo codes of rate 1/3, the first bit of each triple presents the systematic bit, the second bit is the parity 1 bit, and the third bit is the parity 2 bit. For the feedback, the systematic information from MAP decoder 404 is taken because this is generally improved compared to MAP decoder 402. However, since this systematic information is interleafed for MAP decoder 404, the interleaving process is inverted in stage 409 for calculation of systematic feedback. For parity 1 feedback, the parity 1 information derived from MAP decoder 402 is taken. For parity 2 feedback, the parity information from MAP decoder 404 is used.

Further, the codebit metric signals 411, 412 are obtained from MAP decoders 402, 404 and are ordered as a series of 2-tuples, the first bit representing systematic metric, the second being the parity metric. Therefore, in block 407, the signal 411 is split into the systematic metric and parity metric of MAP decoder 402. Likewise, in block 408, the signal 412 is split into systematic metric and parity metric of MAP decoder 404.

These derived metric signals are multiplexed in block 410, so that each triple feedback information signals 414 follows the order of systematic/parity 1/parity 2.

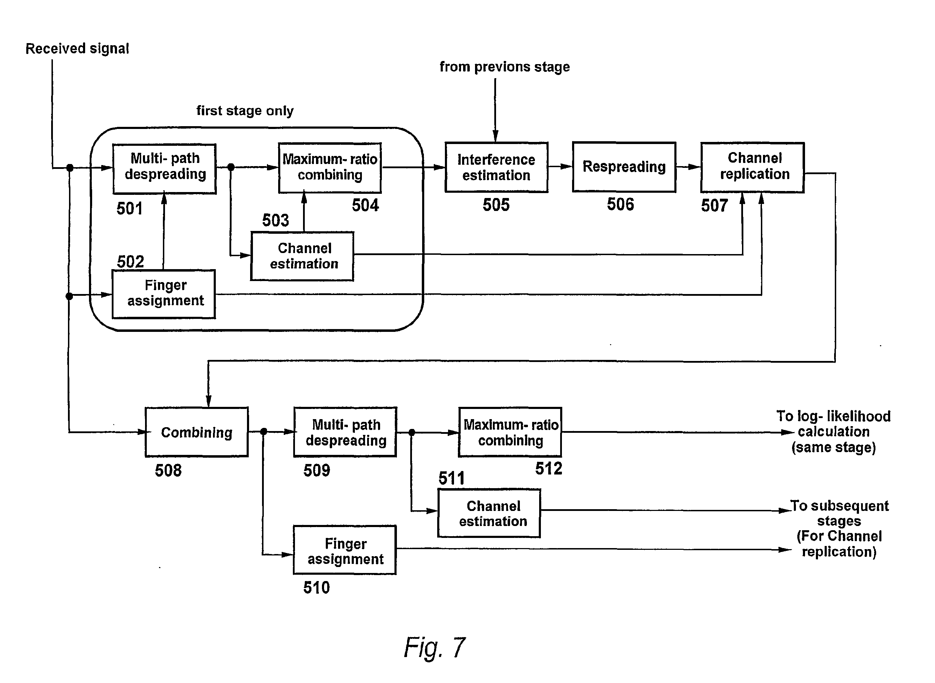

Figure 7 shows a RAKE receiver to which the interference cancellation system of the present invention is applied. RAKE receivers are known in the art, such that a detailed explanation will be omitted as those in the art understand the basic structure thereof.

Blocks 501 to 504 represent a first stage implementation and replace the demodulator 201 in conjunction with the despreader 311 in figure 5. The interference estimation block 505 is identical to the estimator 312 in figure 5. Further, the respreader 313 is replaced by blocks 506 and 507 representing a respreading operation and a channel replication respectively. Furthermore, the combining means 226 in figure 5 corresponds to a combining means 508. The despreader 314 in figure 5 is replaced by blocks 509 to 512.

During operation, interference estimation block 505 receives its input from maximum-ratio combining means 504 and in block 507, a channel replication is formed from the estimate of the received signal including multi-path and fading characteristics of the radio channel. Therefore, information from the finger assignment block 502 is needed to determine the delay of the fingers. Likewise, information from channel estimation block 503 is needed to reproduce the fading characteristics of each path.

The output of the maximum-ratio combining means 512 is used as an input to block 315 of the first stage. The outputs of the channel estimation block 511 and the finger assignment block 510 are fed to channel replication block 507 of the second stage. In subsequent stages, the following changes take effect compared to the first stage as described above. Blocks 501 to 504 are not implemented. In the despreader 507, the signals from previous stage blocks 510, 511 are used instead of the signals of blocks 502, 503. Finally, the input of block 505 uses the output of the MAP decoder 240 from the previous stage, if present.

As an alternative, interference estimation block 505 can also comprise several different blocks to estimate the interference. For example, if pilot signals are transmitted, these are perfectly known to the receiver. Therefore, instead of forming an estimate from the received symbols for those pilot symbols, the original pilot symbols are used because the receiver can be 100% certain that these symbols were transmitted. Therefore, interference estimation of these symbols is most accurate.

**Claims**

1. An interference cancellation system for a CDMA receiver comprising:

   a detector (220), having a first (221) and a second plurality (222) of detector inputs, said first plurality of detector inputs (221) being adapted to receive a plurality of receiver input signals, each receiver input signal being assigned to one of a plurality of n users of a CDMA communication system,
   decoding means (240) for receiving detector output signals from a plurality of detector outputs (223) of said detector (220),
   a feedback loop (250) for applying decoding means output signals as feedback signals to the second plurality of detector inputs (222),
   combination means (226) to combine the receiver input signals and the feedback signals which are fed back by the feedback loop (250) to form the detector output signals; and

   **characterized in that**
   a selection switch (260) for selecting either the receiver input signals or the feedback signals for application to the second plurality of detector inputs (222).

2. The inference cancellation system of claim 1, wherein the selection switch (260) and the second plurality of detector inputs (222) are arranged to apply the receiver input signals to the second plurality of detector inputs (222) during a first iteration step, and apply the feedback signals to the second plurality of detector inputs (222) during the second and each further iteration step.

3. The interference cancellation system of claim 1, further comprising a log-likelihood calculator (230) for calculating a log-likelihood ratio of the detector output signals.

4. The interference cancellation system of claim 1, wherein the decoding means is a soft-input/soft-output decoder (240) which gives information on decoded infobits as well as information on codebits e.g. a MAP or a Bahl decoder.

5. The interference cancellation system of claim 1, further comprising scaling means for scaling each of the feedback signals by a corresponding channel estimate.

6. The interference cancellation system according to claim 1, further comprising cross-correlation calculation means for calculating the cross-correlation coefficient $\rho_{ik}$ between the feedback signals of user i (i=1...n) and user k (i≠k).

7. The interference cancellation system according to claim 5, further comprising:

   despreading means for despreading the feedback signals in a parallel fashion, and
   respreading means for respreading the despread feedback signals in a parallel fashion before scaling same.

8. The interference cancellation system according to claim 1, further comprising summing means for summing in a parallel fashion for all n users except user k the scaled signals to obtain an interference estimate which user k experiences from all other users.

9. The interference cancellation system according to claim 1, further comprising means for obtaining an estimate of the feedback signals.

10. The interference cancellation system according to claim 1, wherein said combination means (226) subtracts the feedback signals from the receiver input signals to provide an estimated user k signal substantially without interference from all other users.

11. A method for interference cancellation for a CDMA receiver, method comprising the steps of:

    receiving a plurality of receiver input signals each being assigned to one of a plurality of n users of the CDMA system,
    applying the receiver input signals to a first plurality of detector inputs of a detector
    decoding the detector output signals as feedback signals to provide decoded bits of the receiver input signals,
    feeding the decoder output signals to a second plurality of detector inputs,
    combining the receiver input signals at the first plurality of detector inputs and the feedback signals at the second plurality of detector inputs to provide detector output signals,
    **characterized by further comprising the steps of**
    selecting either the receiver input signals or the feedback signals for application to the second plurality of detector inputs.

**12.** The method according to claim 11, further comprising the steps of:

applying the receiver input signals to the second plurality of detector inputs during a first iteration step, and
applying the feedback signals to the second plurality of detector inputs during the second and each further iteration step.

**13.** The method according to claim 11, further comprising the step of calculating a log-likelihood ratio of the detector output signals.

**14.** The method according to claim 11, further comprising the steps of scaling each of the feedback signals by a corresponding channel estimate.

**15.** The method according to claim 11, further comprising the step of calculating the cross-correlation coefficient $\rho_{ik}$ between the feedback signals of user i (i=1...n) and user k (i≠k).

**16.** The method according to claim 14, further comprising the step of summing for all n users except user k the scaled signals to obtain an interference estimate which user k experiences from all other users.

**17.** The method according to claim 11, further comprising the step of conversion of the feedback signals to obtain an estimate thereof.

**18.** The method according to claim 11, wherein the combining step comprises subtracting the feedback signals from the receiver input signals to provide an estimated user k signal substantially without interference from all other users.

**Patentansprüche**

**1.** Interferenzunterdrückungssystem für einen CDMA-Empfänger, das umfasst:

einen Detektor (220), der eine erste (221) und eine zweite (222) Vielzahl von Detektoreingängen hat, wobei die erste Vielzahl von Detektoreingängen (221) so eingerichtet ist, dass sie eine Vielzahl von Empfänger-Eingangssignalen empfängt, und jedes Empfänger-Eingangssignal einem einer Vielzahl von n Nutzern eines CDMA-Kommunikationssystems zugewiesen ist,
eine Decodiereinrichtung (240), die Detektor-Ausgangssignale von einer Vielzahl von Detektorausgängen (223) des Detektors (220) empfängt,
eine Rückkopplungsschleife (250), die Decodiereinrichtungs-Ausgangssignale als Rückkopplungssignale an die zweite Vielzahl von Detektoreingängen (222) anlegt,
eine Kombiniereinrichtung (226), die die Empfänger-Eingangssignale und die Rückkopplungssignale, die durch die Rückkopplungsschleife (250) rückgekoppelt werden, kombiniert, um die Detektorausgangssignale zu erzeugen; und
**gekennzeichnet durch**
einen Auswählschalter (260) zum Auswählen entweder der Empfänger-Eingangssignale oder der Rückkopplungssignale zum Anlegen an die zweite Vielzahl von Detektoreingängen (222).

**2.** Interferenzunterdrückungssystem nach Anspruch 1, wobei der Auswählschalter (260) und die zweite Vielzahl von Detektoreingängen (222) so eingerichtet sind, dass sie die Empfänger-Eingangssignale während eines ersten Iterationsschritts an die zweite Vielzahl von Detektoreingängen (222) anlegen und die Rückkopplungssignale während des zweiten und jedes weiteren Iterationsschritts an die zweite Vielzahl von Detektoreingängen (222) anlegen.

**3.** Interferenzunterdrückungssystem nach Anspruch 1, das des Weiteren eine Log-Likelihood-Berechnungseinrichtung (230) zum Berechnen eines Log-Likelihood-Verhältnisses der Detektor-Ausgangssignale umfasst.

**4.** Interferenzunterdrückungssystem nach Anspruch 1, wobei die Decodiereinrichtung ein Soft-Input/Soft-Output-Decoder (240) ist, der Informationen über decodierte Informations-Bits sowie Informationen über Code-Bits gibt, so beispielsweise ein MAP- oder ein Bahl-Decoder.

**5.** Interferenzunterdrückungssystem nach Anspruch 1, das des Weiteren eine Skaliereinrichtung zum Skalieren jedes der Rückkopplungssignale mit einem entsprechenden Kanal-Schätzwert umfasst.

**6.** Interferenzunterdrückungssystem nach Anspruch 1, das des Weiteren eine Kreuzkorrelations-Berechnungseinrichtung umfasst, die den Kreuzkorrelations-Koeffizienten $\rho_{ik}$ zwischen den Rückkopplungssignalen von Nutzer i (i = 1...n) und Nutzer k (i≠k) berechnet.

**7.** Interferenzunterdrückungssystem nach Anspruch 5, das des Weiteren umfasst:

eine Entspreizeinrichtung, die die Rückkopplungssignale parallel entspreizt, und
eine Rückspreizeinrichtung, die die entspreizten Rückkopplungssignale parallel rückspreizt, bevor diese skaliert werden.

8. Interferenzunterdrückungssystem nach Anspruch 1, das des Weiteren eine Summiereinrichtung umfasst, die parallel für alle n Nutzer bis auf Nutzer k die skalierten Signale summiert, um einen Interferenz-Schätzwert zu ermitteln, den Benutzer k von allen anderen Nutzern ausgesetzt ist.

9. Interferenzunterdrückungssystem nach Anspruch 1, das des Weiteren eine Einrichtung zum Ermitteln eines Schätzwerts der Rückkopplungssignale umfasst.

10. Interferenzunterdrückungssystem nach Anspruch 1, wobei die Kombiniereinrichtung (226) die Rückkopplungssignale von den Empfänger-Eingangssignalen subtrahiert, um ein geschätztes Signal von Nutzer k im Wesentlichen ohne Interferenz von allen anderen Nutzern bereitzustellen.

11. Verfahren zur Unterdrückung von Interferenz für einen CDMA-Empfänger, wobei das Verfahren die folgenden Schritte umfasst:

Empfangen einer Vielzahl von Empfänger-Eingangssignalen, die jeweils einem einer Vielzahl von n Nutzern des CDMA-Systems zugewiesen sind,
Anlegen der Empfänger-Eingangssignale an eine erste Vielzahl von Detektoreingängen eines Detektors,
Decodieren der Detektor-Ausgangssignale als Rückkopplungssignale, um decodierte Bits der Empfänger-Eingangssignale bereitzustellen,
Zuführen der Decoder-Ausgangssignale zu einer zweiten Vielzahl von Detektoreingängen,
Kombinieren der Empfänger-Eingangssignale an der ersten Vielzahl von Detektoreingängen und der Rückkopplungssignale an der zweiten Vielzahl von Detektoreingängen, um Detektor-Ausgangssignale bereitzustellen,
**dadurch gekennzeichnet, dass** es des Weiteren die folgenden Schritte umfasst:
Auswählen entweder der Empfänger-Eingangssignale oder der Rückkopplungssignale zum Anlegen an die zweite Vielzahl von Detektoreingängen.

12. Verfahren nach Anspruch 11, das des Weiteren die folgenden Schritte umfasst:

Anlegen der Empfänger-Eingangssignale an die zweite Vielzahl von Detektoreingängen während eines ersten Iterationsschritts, und
Anlegen der Rückkopplungssignale an die zweite Vielzahl von Detektoreingängen während des zweiten und jedes weiteren Iterationsschritts.

13. Verfahren nach Anspruch 11, das des Weiteren den Schritt des Berechnens eines Log-likelihood-Verhältnisses der Detektor-Ausgangssignale umfasst.

14. Verfahren nach Anspruch 11, das des Weiteren den Schritt des Skalierens jedes der Rückkopplungssignale mit einem entsprechenden Kanalschätzwert umfasst.

15. Verfahren nach Anspruch 11, das des Weiteren den Schritt des Berechnens des Kreuzkorrelations-Koeffizienten $\rho_{ik}$ zwischen den Rückkopplungssignalen von Nutzer i (i = 1...n) und Nutzer k (i≠k) umfasst.

16. Verfahren nach Anspruch 14, das des Weiteren den Schritt des Summierens der skalierten Signale für alle n Nutzer mit Ausnahme von Nutzer k umfasst, um einen Interferenz-Schätzwert zu ermitteln, dem Nutzer k von allen anderen Nutzern ausgesetzt ist.

17. Verfahren nach Anspruch 11, das des Weiteren den Schritt des Umwandelns der Rückkopplungssignale zum Ermitteln einer Schätzung derselben umfasst.

18. Verfahren nach Anspruch 11, wobei der Schritt des Kombinierens Subtrahieren der Rückkopplungssignale von den Empfänger-Eingangssignalen umfasst, um ein geschätztes Signal von Nutzer k im Wesentlichen ohne Interferenz von allen anderen Nutzern bereitzustellen.

**Revendications**

1. Système de suppression d'interférence pour un récepteur CDMA comprenant :

un détecteur (220) ayant une première (221) et une seconde (222) pluralités d'entrées de détecteur, ladite première pluralité d'entrées de détecteur (221) étant appropriée pour recevoir une pluralité de signaux d'entrée de récepteur; chaque signal d'entrée de récepteur étant assigné à l'un d'une, pluralité de n utilisateurs d'un système de communication CDMA,
un moyen de décodage (240) pour recevoir les signaux de sortie de détecteur d'une pluralité de sorties de détecteur (223) dudit détecteur (220),
une boucle de rétroaction (250) pour appliquer les signaux de sortie du moyen de décodage en tant que signaux de rétroaction à la seconde pluralité d'entrées de détecteur (222),
un moyen de combinaison (226) pour combiner les signaux d'entrée de récepteur et les signaux de rétroaction qui sont renvoyés par la boucle de rétroaction (250) pour former les signaux de sortie de détecteur ; et
**caractérisé en ce qu'il comprend**
un commutateur de sélection (260) pour sélectionner soit les signaux d'entrée de récepteur, soit les signaux de rétroaction pour une application à la seconde pluralité d'entrées de détecteur (222).

**2.** Système de suppression d'interférence selon la revendication 1, dans lequel le commutateur de sélection (260) et la seconde pluralité d'entrées de détecteur (222) sont agencés de manière à appliquer les signaux d'entrée de récepteur à la seconde pluralité d'entrées de détecteur (222) pendant une première étape d'itération, et à appliquer les signaux de rétroaction à la seconde pluralité d'entrées de détecteur (222) pendant la deuxième et chaque autre étape d'itération.

**3.** Système de suppression d'interférence selon la revendication 1, comprenant en outre un calculateur de logarithme de vraisemblance (230) pour calculer un rapport de logarithme de vraisemblance des signaux de sortie de détecteur.

**4.** Système de suppression d'interférence selon la revendication 1, dans lequel le moyen de décodage est un décodeur à entrée souple et sortie souple (240) qui donne des informations sur les bits d'information décodés, ainsi que des informations sur les bits de code; ex. un décodeur MAP ou un décodeur de Bahl.

**5.** Système de suppression d'interférence selon la revendication 1, comprenant en outre un moyen de mise à l'échelle pour mettre à l'échelle chacun des signaux de rétroaction selon une estimation de canal correspondant.

**6.** Système de suppression d'interférence selon la revendication 1, comprenant en outre un moyen de calcul de corrélation croisée pour calculer le coefficient de corrélation croisée $\rho_{ik}$ entre les signaux de rétroaction de l'utilisateur i (i = 1 ... n) et l'utilisateur k (i ≠ k).

**7.** Système de suppression d'interférence selon la revendication 5, comprenant en outre :

un moyen de désétalement pour désétaler les signaux de rétroaction d'une manière parallèle, et
un moyen de réétalement pour réétaler les signaux de rétroaction désétalés d'une manière parallèle avant de mettre ceux-ci à l'échelle.

**8.** Système de suppression d'interférence selon la revendication 1, comprenant en outre un moyen de sommation pour sommer d'une manière parallèle pour les n utilisateurs à l'exception de l'utilisateur k les signaux mis à l'échelle pour obtenir une estimation d'interférence que l'utilisateur k rencontre en provenance de tous les autres utilisateurs.

**9.** Système de suppression d'interférence selon la revendication 1, comprenant en outre un moyen pour obtenir une estimation des signaux de rétroaction.

**10.** Système de suppression d'interférence selon la revendication 1, dans lequel ledit moyen de combinaison (226) soustrait les signaux de rétroaction des signaux d'entrée de récepteur pour délivrer un signal d'utilisateur k estimé substantiellement sans interférence en provenance de tous les autres utilisateurs.

**11.** Procédé pour la suppression d'interférence pour un récepteur CDMA, le procédé comprenant les étapes consistant à :

recevoir une pluralité de signaux d'entrée de récepteur chacun étant assigné à l'un d'une pluralité de n utilisateurs du système CDMA,
appliquer les signaux d'entrée de récepteur à une première pluralité d'entrées de détecteur d'un détecteur,
décoder les signaux de sortie de détecteur en tant que signaux de rétroaction pour délivrer des bits décodés des signaux d'entrée de récepteur,
envoyer les signaux de sortie de décodeur à une seconde pluralité d'entrées de détecteur,
combiner les signaux d'entrée de récepteur à la première pluralité d'entrées de détecteur et les signaux de rétroaction à la seconde pluralité d'entrées de détecteur pour délivrer des signaux de sortie de détecteur,
**caractérisé en ce qu'il comprend en outre les étapes consistant à :**

sélectionner soit les signaux d'entrée de récepteur, soit les signaux de rétroaction pour une application à la seconde pluralité d'entrées de détecteur.

**12.** Procédé selon la revendication 11, comprenant en outre les étapes consistant à :

appliquer les signaux d'entrée de récepteur à la seconde pluralité d'entrées de détecteur pendant une première étape d'itération, et
appliquer les signaux de rétroaction à la seconde pluralité d'entrées de détecteur pendant la deuxième et chaque autre étape d'itération.

**13.** Procédé selon la revendication 11, comprenant en outre l'étape de calculer un logarithme du rapport de vraisemblance des signaux de sortie de détecteur.

**14.** Procédé selon la revendication 11, comprenant en outre les étapes de mettre à l'échelle chacun des signaux de rétroaction selon une estimation de canal correspondant.

**15.** Procédé selon la revendication 11, comprenant en outre l'étape de calculer le coefficient de corrélation croisée $\rho_{ik}$ entre les signaux de rétroaction de l'utilisateur i (i = 1 ... n) et l'utilisateur k (i ≠ k).

**16.** Procédé selon la revendication 14, comprenant en outre l'étape de sommer pour tous les n utilisateurs à l'exception de l'utilisateur k les signaux mis à l'échelle pour obtenir une estimation d'interférence que l'utilisateur k rencontre en provenance de tous les autres utilisateurs.

**17.** Procédé selon la revendication 11, comprenant en outre l'étape de convertir les signaux de rétroaction pour obtenir une estimation de ceux-ci.

**18.** Procédé selon la revendication 11, dans lequel l'étape de combinaison comprend de soustraire les signaux de rétroaction des signaux d'entrée de récepteur pour délivrer un signal d'utilisateur k estimé substantiellement sans interférence en provenance de tous les autres utilisateurs.

EP 1 226 658 B1

**100**

n users

| Source 101 | Encoder 102 | Spreading Modulator 103 |

Channel

*Fig. 1*

Channel

Demodulator 201

Despreader User k 202

n users

Interference Cancellation & Decoding Stage

n users

210

*Fig. 2*

**200**

Fig. 3

EP 1 226 658 B1

**estimated log- likelihood**

**ratios $\varepsilon_k$**

222 **n users**

$U_k = \tanh (0,5 * \varepsilon_k)$

224

$\xi_k = \sum A_i * P_{ik} * u_i$

$i = 1 \ldots n$

$i \neq k$

225

**interference estimate** $\xi_k$

**received input signal** $r_k$

221

**n users**

$\ominus$

**improved signal** $y_k$

$y_k = r_k - \xi_k$

226

223

**n users**

*Fig. 4*

EP 1 226 658 B1

*Fig. 5*

EP 1 226 658 B1

Fig. 6

Fig. 7